# EUROPÄISCHE PATENTSCHRIFT

(11) **EP 1 117 578 B1**
(45) Veröffentlichungstag und Bekanntmachung des Hinweises auf die Patenterteilung: **21.06.2006**
(21) Anmeldenummer: 99970970.2
(22) Anmeldetag: 27.10.1999
(51) Int. Cl.: B60T 7/00

(54) **VORRICHTUNG ZUR BREMSKRAFTSTEUERUNG EINER BREMSANLAGE**
DEVICE FOR CONTROLLING THE BRAKING POWER OF A BRAKE SYSTEM
DISPOSITIF POUR LA COMMANDE DE LA FORCE DE FREINAGE D'UN SYSTEME DE FREINAGE

(30) Priorität: 27.10.1998 DE 19849411; 25.08.1999 DE 19940252
(43) Veröffentlichungstag der Anmeldung: 25.07.2001
(73) Patentinhaber: Continental Teves AG & Co. oHG, 60488 Frankfurt am Main (DE)
(72) Erfinder: BAIJENS, Mark, D-64546 Mörfelden-Walldorf (DE); PFEIFFER, Jürgen, D-61479 Glashütten (DE)
(86) Internationale Anmeldenummer: PCT/EP1999/008124
(87) Internationale Veröffentlichungsnummer: WO 2000/024617

(56) Entgegenhaltungen:
- DE-A- 19 511 694
- DE-A- 19 624 376
- DE-A- 19 624 794
- DE-A- 19 718 168

## Beschreibung

Die Erfindung betrifft eine Vorrichtung zur Bremskraftsteuerung einer Bremsanlage mit einer Sensorik zur Ermittlung eines Istwertes einer eine Bremsung verursachenden Bremskraft, einer Ermittlungseinrichtung zum Ermitteln eines Sollwertes für die Bremskraft und einer Steuereinheit zum Ermitteln einer Ansteuergröße für ein Stellglied zum Einstellen der Bremskraft, wobei die Steuereinheit den Sollwert von der Ermittlungseinrichtung und den Istwert von der Sensorik empfängt, einen von zumindest zwei unterschiedlichen Betriebszuständen der Bremsanlage nach Maßgabe des Sollwertes und/oder des Istwertes bestimmt, die Ansteuergröße für das Stellglied in Abhängigkeit von dem Sollwert und/oder dem Istwert und nach Maßgabe des bestimmten Betriebszustandes ermittelt und die Ansteuergröße an das Stellglied ausgibt. Die Vorrichtung zur Bremskraftsteuerung kann insbesondere an verschiedene Bremssituationen angepaßt werden, so daß eine Steuerung mit hoher Güte ermöglicht wird.

In der Druckschrift DE 196 243 76 A1 ist eine Bremsanlage für Kraftfahrzeuge mit einer Betätigungseinheit beschrieben, die aus einem pneumatischen Bremskraftverstärker sowie einen ihm nachgeschalteten Hauptbremszylinder besteht. An den Hauptbremszylinder sind Radbremsen angeschlossen. Das Steuerventil des Bremskraftverstärkers ist unabhängig vom Fahrerwillen mittels eines Elektromagneten ansteuerbar, durch dessen Anker einer der Steuerventil-Dichtsitze betätigbar ist. Die Bremsanlage enthält einen Bremsdruckregler, dem ein einem Soll-Bremsdruck entsprechendes Signal und ein einem Ist-Bremsdruck entsprechendes Signal zugeführt wird und dessen Ausgangsgröße einem Sollwert des dem Elektromagneten zuzuführenden elektrischen Strom entspricht. Der Bremsdruckregler ist durch eine Parallelschaltung einer das Sollbremsdrucksignal zu einem ersten Stromwert verarbeitenden elektronischen Steuerschaltung sowie einer Regelschaltung gebildet, die eine aus dem Sollbremsdrucksignal sowie dem Istdrucksignal gebildete Regeldifferenz zu einem zweiten Stromwert verarbeitet, wobei die Ausgangsgröße des Bremsdruckreglers durch Addition der beiden Stromwerte gebildet wird.

Dieser Bremsdruckregler hat jedoch den Nachteil, daß er nicht an jede Bremssituation optimal angepaßt ist, wodurch die Regelgüte beeinträchtigt wird.

Aus der DE 196 24 794 A1 ist ebenfalls eine Vorrichtung zur Bremskraftsteuerung einer Bremsanlage der eingangs genannten Gattung bekannt. Die vorbekannte Vorrichtung weist einen Bremsdruckregler auf, dem ein Stromregler nachgeschaltet ist, der Mittel zur Kompensation von der bei der Betätigung des elektromagnetisch betätigbaren Dichtsitzes auftretenden mechanischen und magnetischen Hystereseeffekten aufweist. Allerdings ist auch dieser Bremsdruckregler nicht an jede Bremssituation optimal angepaßt.

Die DE 195 11 694 A1 offenbart ebenfalls eine Vorrichtung zur Bremskraftsteuerung einer Bremsanlage der eingangs genannten Gattung. Bei der vorbekannten Vorrichtung ist zur Erhöhung der Qualität der Regelung vorgesehen, dass der Bremsdruckregler durch eine Parallelschaltung eines ersten Reglers, der schnellen zeitlichen Änderungen des dem Soll-Bremsdruck entsprechenden Signals folgt, und eines zweiten Reglers, der langsamen Änderungen bzw. statischen Werten des dem Soll-Bremsdruck entsprechenden Signals folgt, gebildet ist. Anschließend werden die Ausgangsgrößen der beiden Regler einer situativen Umschaltlogik zugeführt. Als weniger vorteilhaft ist bei dem vorbekannten Bremsdruckregler anzusehen, dass eine Anpassung an beliebige Situationen nicht ausreichend variabel vorgenommen wird, was eine nicht ausreichend komfortable Regelgüte zur Folge hat.

Eine Aufgabe der Erfindung ist es, eine Vorrichtung zur Bremskraftsteuerung einer Bremsanlage anzugeben, die eine verbesserte Bremskraftsteuerung mit einer hohen Genauigkeit ermöglicht.

Diese Aufgabe wird mit den Merkmalen des unabhängigen Anspruchs 1 gelöst. Abhängige Ansprüche sind auf bevorzugte Ausführungsformen der Erfindung gerichtet.

Die Bremsanlage kann zum einen hydraulisch über einen Bremsdruck eine Bremsung verursachen, wobei die Bremskraft dann ein Bremsdruck sein kann, der gesteuert werden soll. Zum anderen kann die Bremsanlage elektromechanisch eine Bremsung bewirken, wobei dann z.B. die Bremskraft der auf eine Bremsscheibe wirkenden Bremsbeläge oder auch z.B. die Spannkraft zum Spannen der Bremse gesteuert werden können. Vorzugsweise wird jedoch ein Bremsdruck gesteuert. Die Ansteuergröße kann ein Strom zum Ansteuern eines Elektromagneten sein, der z.B. ein Ventil eines Bremskraftverstärkers ansteuert. Die Ansteuergröße kann auch ein einen Motor ansteuernder Strom sein, wobei der Motor wiederum eine Mechanik zum Spannen der Bremse ansteuern kann.

Der Sollwert kann z.B. von einer Fahrzeugregelung ermittelt werden, wobei der Fahrzeugregler z.B. einen Abstand zu einem Vorderfahrzeug regeln kann. Der Sollwert könnte aber auch von einem Fahrer über ein Bremspedal oder ein anderes Betätigungselement vorgegeben werden. Der Istwert kann z.B. über einen Drucksensor in einem Tandemhauptzylinder der Bremsanlage oder z.B. über eine Kraftmeßschraube ermittelt werden. Erfindungsgemäß kann eine Steuereinheit vorgesehen sein, die in Abhängigkeit von dem Sollwert und/oder dem Istwert einen Betriebszustand der Bremsanlage, d.h. z.B. eine bestimmte Bremssituation bestimmen kann. Sie kann weiterhin dementsprechend die Ansteuergröße ermitteln, die sie an ein Stellglied wie z.B. einen Elektromagneten oder einen Motor ausgeben kann. Weiterhin kann die Ansteuergröße z.B. auch als Sollgröße einem weiteren Regler zugeführt werden, der zur Regelung der Ansteuergröße dienen kann.

Als mögliche zu bestimmende Betriebszustände können zum einen eine Kraftaufbauphase, eine Kraftabbauphase und/oder eine Krafthaltephase erkannt werden. Dafür kann die Steuereinheit ein Situationserkennungsmodul aufweisen. Das Situationserkennungsmodul wertet vorzugsweise den Sollwert bzw. die Sollwertänderung in Abhängigkeit von der Zeit aus. Eine Krafthaltephase kann dann z.B. erkannt werden, wenn sich der Sollwert über einen bestimmten Zeitraum nicht oder nur geringfügig ändert.

Die Steuereinheit kann weiterhin eine Regelungseinrichtung enthalten, an der eingangsseitig der Istwert und der Sollwert anliegen, wobei ein Regler in Abhängigkeit von der Regeldifferenz zwischen dem Sollwert und dem Istwert die Ansteuergröße für das Stellglied ermitteln kann. Die Regeldifferenz kann dabei zum einen aus der Subtraktion des Sollwertes von dem Istwert und zum anderen aus der Subtraktion des Istwertes von dem Sollwert gebildet werden.

Weitere Betriebszustände können sich z.B. in Abhängigkeit von der Höhe des Sollwertes und/oder des Istwertes und/oder der Regeldifferenz und/oder der Änderungsgeschwindigkeit der Regeldifferenz ergeben. Dadurch ist eine an die jeweiligen Betriebszustände angepaßte Steuerung bzw. Regelung möglich, so daß sich eine verbesserte Regelgüte erzielen läßt.

Verschiedene Ausführungsformen der Erfindung werden im folgenden beispielhaft mit Bezug auf die schematischen Zeichnungen näher beschrieben. Es zeigen:
- Fig. 1: ein Blockschaltbild einer Ausführungsform der erfindungsgemäßen Vorrichtung,
- Fig. 2: ein Blockschaltbild einer Ausführungsform einer Regelungseinrichtung zum Regeln einer Bremskraft,
- Fig. 3: ein Blockschaltbild einer Ausführungsform der erfindungsgemäßen Steuereinheit,
- Fig. 4: ein Flußdiagramm einer Ausführungsform des implementierten Verfahrens,
- Fig. 5: beispielhaft ein Diagramm, das den Sollwertverlauf, den Istwertverlauf und den Verlauf der Ansteuergröße über der Zeit darstellt,
- Fig. 6: beispielhaft ein Diagramm, das den Verlauf des Sollwertes, des Istwertes und der Ansteuergröße für zwei unterschiedliche Sollwertverläufe über der Zeit darstellt,
- Fig. 7: beispielhaft ein Diagramm zur Verdeutlichung der Ermittlung der Sprunghöhe für die Ansteuergröße und
- Fig. 8: beispielhaft ein Diagramm zur Verdeutlichung des Überschwingbetriebszustands.

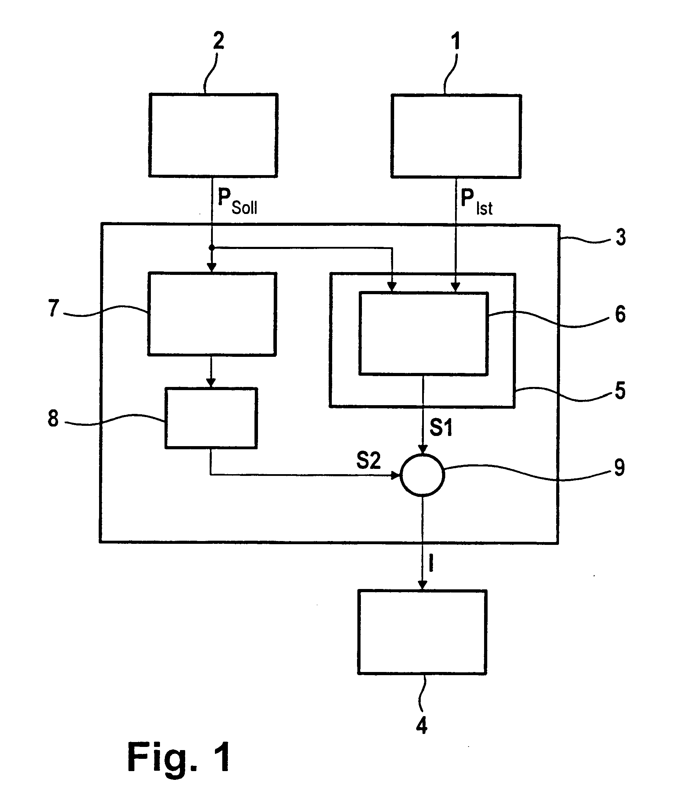

In Fig. 1 ist eine Sensorik 1 zur Ermittlung eines Istwertes P_{Ist} dargestellt, die diesen an eine Steuereinheit 3 ausgibt. Die Sensorik 1 kann z.B. einen Drucksensor enthalten, der den Ist-Druck in einem Tandemhauptzylinder erfaßt. Die Steuereinheit 3 empfängt weiterhin einen Sollwert P_{Soll} von einer Ermittlungseinrichtung 2. Die Ermittlungseinrichtung 2 kann, wie bereits erwähnt, ein Fahrzeugregler sein, der z.B. in Abhängigkeit von einem Eingangssignal eines Abstandssensors den Sollwert P_{Soll} ermittelt. Die Steuereinheit 3 enthält eine Regelungseinrichtung 5 mit einem Regler 6, an deren Eingänge der Sollwert P_{Soll} und der Istwert P_{Ist} anliegen. Der Regler 6 kann z.B. ein PID-Regler sein. Er gibt eine erste Stellgröße S1 an eine Verknüpfungseinrichtung 9 aus.

Die Steuereinheit 3 enthält weiterhin ein Situationserkennungsmodul 7, dem der Sollwert P_{Soll} zugeführt wird, wobei das Situationserkennungsmodul 7 z.B. durch Auswerten des Sollwertverlaufes eine Kraftaufbauphase, Kraftabbauphase und/oder eine Krafthaltephase erkennen kann. Dementsprechend kann es ein Signal an ein nichtlineares Übertragungsglied 8 mit einer Dreipunktkennlinie ausgeben. Das Übertragungsglied 8 kann dann entsprechend eine zweite Stellgröße S2 ausgeben. So kann z.B. bei Erkennen einer Kraftaufbauphase eine vorgegebene obere zweite Stellgröße S2 ausgegeben werden, bei Erkennen einer Kraftabbauphase eine untere zweite Stellgröße S2 und bei Erkennen einer Krafthaltephase eine mittlere zweite Stellgröße S2, deren Wert zwischen denen der oberen und unteren zweiten Stellgröße S2 liegen kann, wobei die untere, mittlere und obere zweite Stellgröße S2 vorzugsweise größer oder gleich Null sind.

Die Verknüpfungseinrichtung 9 verknüpft die beiden Stellgrößen S1 und S2 zu einer endgültigen Ansteuergröße I für ein Stellglied 4. Vorzugsweise werden die beiden Stellgrößen S1 und S2 addiert. Weiterhin kann eine Verbindung zwischen dem Situationserkennungsmodul 7 und der Regelungseinrichtung 5 bzw. dem Regler 6 vorgesehen sein, wodurch dann z.B. die Reglerparameter wie z.B. Verstärkungsfaktoren oder Zeitkonstanten in Abhängigkeit von dem vom Situationserkennungsmodul 7 erkannten Betriebszustand beeinflußt werden können. Denkbar ist auch, daß das Situationserkennungsmodul 7 und das Übertragungsglied 8 in der Regelungseinrichtung 5 realisiert sind.

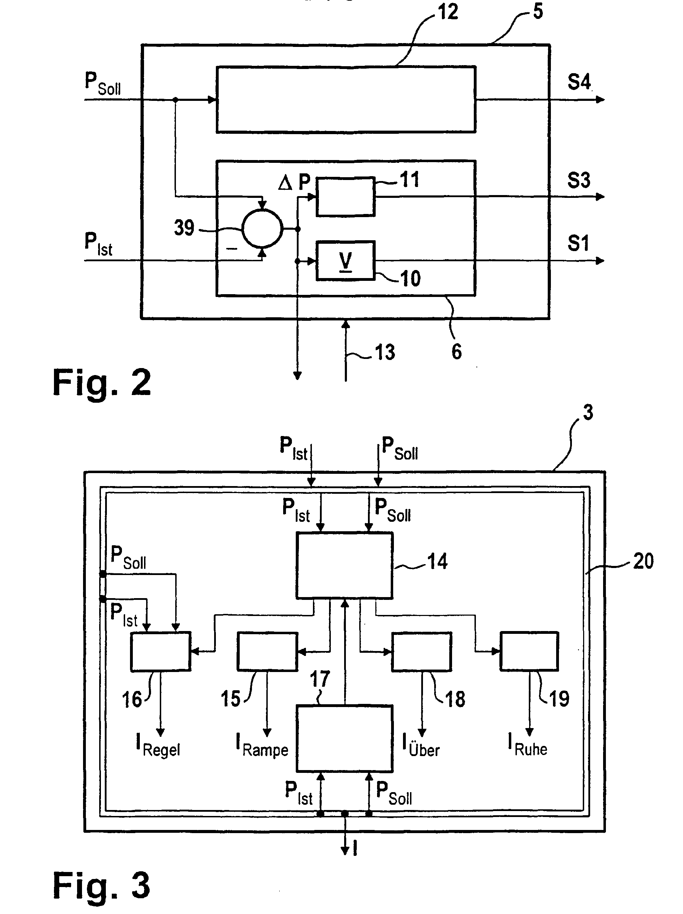

In Fig. 2 ist eine Ausführungsform der in Fig. 1 gezeigten Regelungseinrichtung 5 detaillierter dargestellt. Die Regelungseinrichtung 5 weist den in Fig. 1 gezeigten Regler 6 auf, der an einem Summationspunkt 39 die Differenz ΔP zwischen dem Sollwert P_{Soll} und dem Istwert P_{Ist} bildet. Diese Differenz ΔP wird einem Verstärkungsglied 10 und einem Dreipunktschalter 11 zugeführt. Außerdem kann die Regeldifferenz ΔP z.B. von der Regelungseinrichtung 5 an ein weiteres nicht gezeigtes beliebiges Modul der Steuereinheit ausgegeben werden. In dieser Ausführungsform gibt das Verstärkungsglied 10 die erste Stellgröße S1 aus. Der Verstärkungsfaktor V des Verstärkungsgliedes 10 kann z.B. in Abhängigkeit von der Regeldifferenz ΔP geändert werden. Dieses erfolgt vorzugsweise während einer Krafthaltephase, so daß der Verstärkungsfaktor V optimal eingestellt werden kann. Der Verstärkungsfaktor V kann z.B. vergrößert werden, wenn die Regeldifferenz ΔP außerhalb eines vorgegebenen Differenzbereichs liegt. Im optimalen Fall kann die Regeldifferenz ΔP gleich Null sein, wobei dann der Differenzbereich um die Nullinie angeordnet sein kann.

Der Dreipunktschalter 11 kann z.B. drei unterschiedliche dritte Stellgrößen S3 in Abhängigkeit von der Regeldifferenz ΔP ausgeben. So kann die dritte Stellgröße S3 z.B. einen vorgegebenen negativen Wert annehmen, wenn die Regeldifferenz ΔP einen vorgegebenen negativen Schwellenwert unterschreitet. Die dritte Stellgröße S3 kann z.B. gleich einem vorgegebenen positiven Wert sein, wenn die Regeldifferenz ΔP einen vorgegebenen positiven Schwellenwert überschreitet. Liegt die Regeldifferenz ΔP z.B. zwischen dem negativen Schwellenwert und dem positiven Schwellenwert, so kann die dritte Stellgröße S3 z.B. gleich Null sein. Eine Verschiebung der Bereiche ins Positive oder Negative ist auch denkbar. Vorzugsweise ist der Dreipunktschalter 11 nur während einer Haltephase aktiv. Ein entsprechendes Signal kann z.B. von dem Situationserkennungsmodul 7 über die Leitung 13 in die Regelungseinrichtung 5 eingegeben werden.

Der Regler 6 kann auch einen Differenzierer mit z.B. einem nachgeschalteten Verstärkungsglied und/oder einen Integrierer mit z.B. einem nachgeschalteten Verstärkungsglied enthalten. Das Differenzier- und/oder Integrierglied differenziert bzw. integriert dann die Regeldifferenz ΔP und kann dann z.B. entsprechend weitere Stellgrößen ausgeben. Die jeweiligen Verstärkungsfaktoren der Verstärkungsglieder können z.B. auch in Abhängigkeit von dem vom Situationserkennungsmodul 7 erkannten Betriebszustand geändert werden.

Die Regelungseinrichtung 5 enthält außerdem eine Vorsteuerung 12, die in Abhängigkeit vom Sollwert P_{Soll} eine entsprechende vierte Stellgröße S4 ausgibt. Die Vorsteuerung 12 kann z.B. ein Verstärkungsglied und/oder ein Differenzierglied mit z.B. einem nachgeschalteten Verstärkungsglied enthalten. Auch hier können die jeweiligen Verstärkungsglieder der Vorsteuerung 12 z.B. nach Maßgabe des vom Situationserkennungsmodul 7 bestimmten Betriebszustandes geändert werden.

Vorteilhaft wird die vierte Stellgröße S4 in größeren Zeitabständen, z.B. alle 7 ms, ermittelt als die erste S1 und/oder dritte S3 Stellgröße, die z.B. alle 2 ms ermittelt werden können. Dieses hat den Vorteil, daß ein wesentlicher Anteil an Rechenzeit eingespart wird. Häufig ändert sich der Sollwert P_{Soll} nur sehr langsam, so daß auch die Vorsteuerung 12 nicht so schnell arbeiten muß. Dahingegen sollten sich die Stellgrößen des Reglers 6 schnell ändern können, um die Stabilität des Gesamtsystems gewährleisten zu können. Daher sollte der Regler 6 in kürzeren Zeitabständen arbeiten.

In Fig. 3 ist eine andere Ausführungsform der erfindungsgemäßen Steuereinheit 3 aus Fig. 1 gezeigt. Ihr werden der Istwert P_{Ist} und der Sollwert P_{Soll} zugeführt, die über eine Leitung 20, die auch aus mehreren Leitungen bestehen kann, weiteren Einrichtungen zugeführt werden können. Die Steuereinheit 3 enthält ein Organisationsmodul 14, das in Abhängigkeit von dem Istwert P_{Ist} und/oder dem Sollwert P_{Soll} unterschiedliche Betriebszustände bestimmen kann und entsprechende Signale jeweils an ein Rampenmodul 15, ein Kraftregelmodul 16, ein Überschwingmodul 18 und ein Ruhemodul 19 ausgeben kann. Die Module 15, 16, 18 und 19 ermitteln dann entsprechend dem jeweiligen Betriebszustand eine Ansteuergröße I_{Rampe}, I_{Regel}, I_{Uder} bzw. I_{Ruhe}. Die Steuereinheit 3 kann dann daraus die entsprechende Ansteuergröße I auswählen und ausgeben.

Weiterhin weist die Steuereinheit 3 ein Überwachungsmodul 17 auf, das den Sollwert P_{Soll} von dem Istwert P_{Ist} subtrahieren kann, um eine Regelabweichung P_{diff} zu erhalten, und das außerdem die Regelabweichung P_{diff} differenzieren kann, um die Änderungsgeschwindigkeit der Regelabweichung Ṗ_{diff} zu erhalten. Das Überwachungsmodul 17 bestimmt dann z.B. einen Überschwingbetriebszustand, wenn die Regelabweichung P_{diff} größer als ein Überschwingwert Ü ist und z.B. zusätzlich die positive Änderungsgeschwindigkeit der Regelabweichung Ṗ_{diff} größer als ein Überschwingänderungswert ΔÜ ist. Das Überwachungsmodul 17 kann dann ein entsprechendes Signal an das Organisationsmodul 14 ausgeben. Der Überschwingwert Ü kann z.B. in einem Bereich zwischen 2 bar und 10 bar, beispielsweise bei 6 bar liegen. Der Überschwingänderungswert ΔÜ kann in einem Bereich zwischen 5 bar/s und 20 bar/s, beispielsweise bei 10 bar/s liegen.

Die Regelabweichung P_{diff} kann der Regeldifferenz ΔP des Reglers 6 entsprechen und könnte dann auch z.B. von diesem ermittelt werden. Ebenso könnte die Änderungsgeschwindigkeit der Regelabweichung Ṗ_{diff} dann über ein Differenzierglied des Reglers 6 ermittelt werden. Die Regelabweichung P_{diff} und die Änderungsgeschwindigkeit der Regelabweichung P_{diff} können dann z.B. vom Regler 6 dem Überwachungsmodul 17 zugeführt werden, das dann auf die Eingangsgrößen Istwert P_{Ist} und Sollwert P_{Soll} verzichten kann. Die Arbeitsweise der einzelnen Module der Fig. 3 wird später anhand der weiteren Figuren näher erläutert.

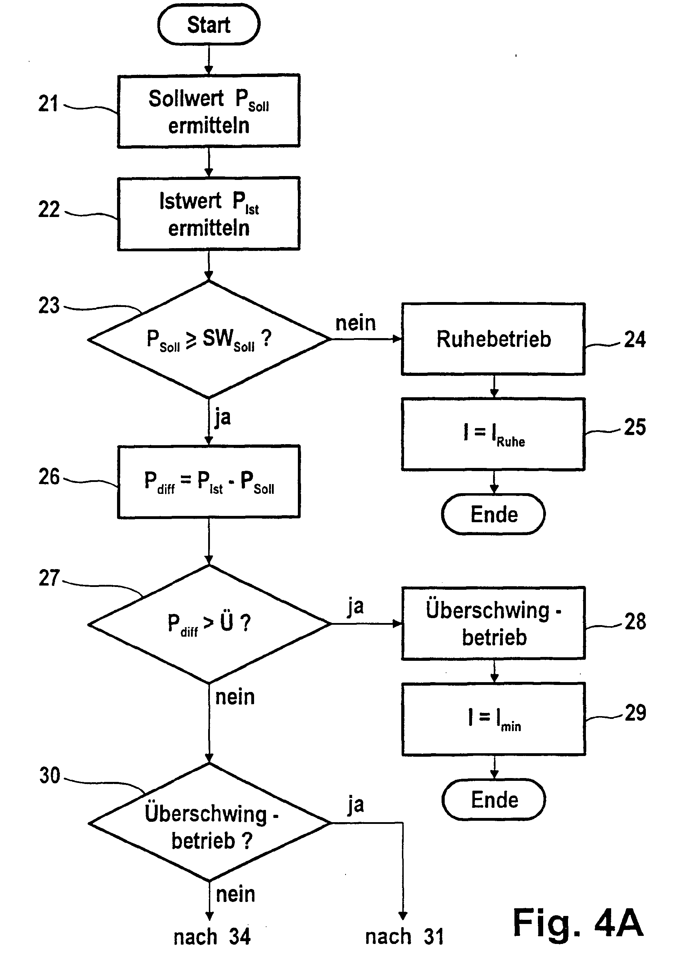

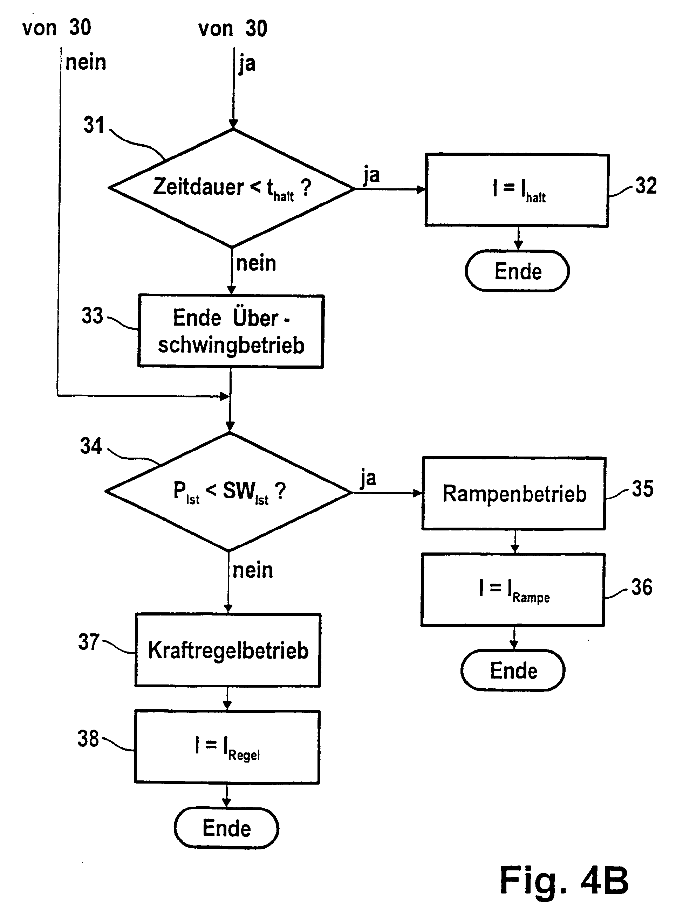

In Fig. 4 ist ein Flußdiagramm einer erfindungsgemäßen Ausführungsform gezeigt. In Fig. 4A wird zunächst im Schritt 21 der Sollwert Pₛₒₗₗ ermittelt. Danach wird im Schritt 22 der Istwert P_{Ist} ermittelt. Anschließend wird im Schritt 23 abgefragt, ob der Sollwert P_{Soll} größer oder gleich einem Sollschwellenwert SW_{Soll} ist, der z.B. in einem Bereich zwischen 0 und 1 bar, beispielsweise bei 0,2 bar liegen kann. Ist dieses nicht der Fall, wird im Schritt 24 ein Ruhebetriebszustand ermittelt und entsprechend in den Ruhebetrieb übergegangen. Dabei wird im anschließenden Schritt 25 die Ansteuergröße I gleich einer Ruheansteuergröße I_{Ruhe} gesetzt, die das Stellglied 4 nicht ansteuert. Die Ruheansteuergröße I_{Ruhe} kann z.B. gleich Null sein. Wird die Abfrage im Schritt 23 bejaht, d.h., daß der Sollwert P_{Soll} größer als der Sollschwellenwert SW_{Soll} ist, wird im Schritt 26 der Sollwert P_{Soll} von dem Istwert P_{Ist} abgezogen, woraus sich die Regelabweichung P_{diff} ergibt. Danach wird im Schritt 27 abgefragt, ob die Regelabweichung P_{diff} größer als der Überschwingwert Ü ist. Ist dies der Fall, wird im Schritt 28 ein Überschwingbetriebszustand ermittelt und entsprechend in den Überschwingbetrieb übergegangen. Dementsprechend wird im nachfolgenden Schritt 29 die Ansteuergröße I gleich einer minimalen Ansteuergröße Iₘᵢₙ gesetzt, die gleich der Ruheansteuergröße I_{Ruhe} sein kann. Wird die Abfrage im Schritt 27 verneint, d.h., daß die Regelabweichung P_{diff} kleiner oder gleich dem Überschwingwert Ü ist, wird im Schritt 30 abgefragt, ob sich die Bremsanlage im Überschwingbetrieb befindet. Ist dies der Fall, wird zum Schritt 31 der Fig. 4B übergegangen. Ist dies nicht der Fall, wird zum Schritt 34 der Fig. 4B übergegangen.

In Fig. 4B wird zunächst im Schritt 31 abgefragt, ob die Zeitdauer des Überschwingbetriebszustandes kleiner als eine Haltezeitdauer tₕₐₗₜ ist. Ist dies der Fall, wird die Ansteuergröße I auf einen Haltewert Iₕₐₗₜ gesetzt. Wird die Abfrage im Schritt 31 verneint, d.h., daß die Zeitdauer des Überschwingbetriebszustands größer oder gleich der Haltezeitdauer tₕₐₗₜ ist, wird im Schritt 33 das Ende des Überschwingbetriebszustandes bestimmt. Daran anschließend wird zur Bestimmung eines neuen Betriebszustandes im Schritt 34 abgefragt, ob der Istwert P_{Ist} kleiner als ein Istschwellenwert SW_{Ist} ist. Ist dies der Fall, wird im Schritt 35 ein Rampenbetriebszustand ermittelt und entsprechend in den Rampenbetrieb übergegangen. Dementsprechend wird im nachfolgenden Schritt 36 die Ansteuergröße I auf einen Rampenwert I_{Rampe} gesetzt. Wird die Abfrage im Schritt 34 verneint, d.h., daß der Istwert P_{Ist} größer oder gleich dem Istschwellenwert SW_{Ist} ist, wird im Schritt 37 ein Kraftregelbetriebszustand ermittelt und entsprechend in den Kraftregelbetrieb übergegangen. Dementsprechend wird im nachfolgenden Schritt 38 die Ansteuergröße I auf einen Regelwert I_{Regel} gesetzt.

Aus der Fig. 4 wird deutlich, daß es in der dort gezeigten Ausführungsform wichtig sein kann, wie groß der Sollwert P_{Soll} ist. Ist er kleiner als der Sollschwellenwert SW_{Soll}, so wird ein Ruhebetriebszustand aufrechterhalten, der solange andauert, bis der Sollwert P_{Soll} größer oder gleich dem Sollschwellenwert SW_{Soll} ist. Erst dann können die weiteren Betriebszustände, die auch als aktive Betriebszustände bezeichnet werden können, bestimmt werden. Das hat den Vorteil, daß ungewollte Störungen des Sollwertes P_{Soll}, z.B. Abweichungen von Null, nicht bereits zu einer Ansteuerung des Stellglieds 4 führen, da eine Bremsung noch nicht gewünscht ist. Der Sollschwellenwert SW_{Soll} kann z.B. bei 0,2 bar liegen.

Im Ruhebetrieb muß die Ansteuergröße I nicht notwendigerweise auf Null gesetzt werden, sondern sie kann auch auf einem kleinen Wert gehalten werden, der nicht dazu geeignet ist, das Stellglied 4 anzusteuern. Insbesondere bei der Ansteuerung eines Elektromagneten zur Ansteuerung eines Ventils bedarf es eines Mindeststromes, um einen Istdruck P_{Ist} zu erzeugen bzw. erfassen zu können.

Weiterhin ist in der Ausführungsform der Fig. 4 der Überschwingbetriebszustand allen anderen aktiven Betriebszuständen übergeordnet. Sobald in einem der aktiven Betriebszustände ein Überschwingen dadurch erkannt wird, daß die Regelabweichung P_{diff} größer als der Überschwingwert Ü ist, wird in den Überschwingbetrieb übergegangen. Dieser Betriebszustand wird erst beendet, wenn die Ansteuergröße I für eine Zeitdauer tₕₐₗₜ auf einem Haltewert Iₕₐₗₜ gehalten wurde. Es sind jedoch auch andere Bedingungen für die Beendigung des Überschwingbetriebszustandes denkbar. Diese könnten in Abhängigkeit von der Regelabweichung P_{diff}, der Änderung der Regelabweichung Ṗ_{diff} oder z.B. auch in Abhängigkeit von dem Istwert P_{Ist} oder dem Sollwert P_{Soll} festgelegt werden.

Der Rampenbetriebszustand wird eingesetzt, um den Istwert P_{Ist} möglichst schnell und ohne Überschwingen auf den Istschwellenwert SW_{Ist} zu bringen. Dieser Wert kann z.B. in einem Bereich zwischen 0 und 1 bar, beispielsweise bei 0,1 bar liegen. Erst dann kann es sinnvoll sein, die Bremskraft im Kraftregelbetriebszustand zu regeln.

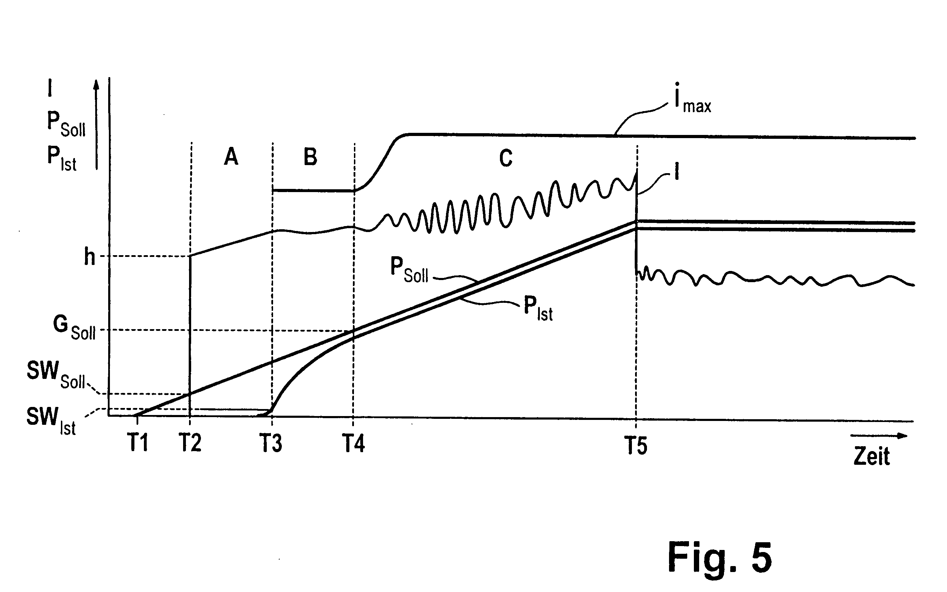

Fig. 5 gibt einen Überblick über einige mögliche Betriebszustände bzw. Phasen. In dem dargestellten Diagramm sind der Verlauf der Ansteuergröße I, des Sollwertes P_{Soll} und des Istwertes P_{Ist} in Abhängigkeit von der Zeit dargestellt. Zum Zeitpunkt T1 beginnt der Sollwert P_{Soll} zu steigen. Die Bremsanlage befindet sich jedoch solange im Ruhezustand, bis der Sollwert P_{Soll} zum Zeitpunkt T2 den Sollschwellenwert SW_{Soll} erreicht. Dann wird zum Rampenbetriebszustand, gekennzeichnet durch den Bereich A, übergegangen, in dem z.B. das Rampenmodul 15 die Ansteuergröße I vorgeben kann.

Hierbei wird die Ansteuergröße I zunächst sprungartig auf einen Wert h (Sprunghöhe) gesetzt. Danach kann die Ansteuergröße I entsprechend einer Geraden mit einer vorgegebenen Steigung verlaufen. Ein anders ausgebildeter, vorzugsweise ansteigender Verlauf ist auch möglich. Zum Zeitpunkt T3 hat der Istwert P_{Ist} den Istschwellenwert SW_{Ist} erreicht. Danach wird in den Kraftregelbetriebszustand, gekennzeichnet durch die Bereiche B und C, übergegangen, in dem das Kraftregelmodul 16 die Ansteuergröße I ermitteln kann. Hierbei kann die Ansteuergröße I z.B. von der Regelungseinrichtung 5 ermittelt werden. Um einen glatten Übergang zwischen dem Rampenbetriebszustand und dem Kraftregelbetriebszustand zu ermöglichen, kann z.B. während einer Übergangsphase B die Änderungsgeschwindigkeit der Ansteuergröße İ, vorzugsweise der Betrag der Änderungsgeschwindigkeit der Ansteuergröße |İ| auf einen Maximalwert İₘₐₓ begrenzt werden. Dadurch kann z.B. eine gleiche Steigung der Ansteuergröße I zum Zeitpunkt T3 beim Übergang von Bereich A zu B und ebenso zum Zeitpunkt T4 beim Übergang vom Bereich B zu C ermöglicht werden. Im Bereich C ist ab dem Zeitpunkt T4 die Übergangsphase B beendet. In der in Fig. 5 gezeigten Ausführungsform ist der Wert İₘₐₓ während der Übergangsphase B konstant und steigt zu Beginn der nachfolgenden Phase C auf einen endgültigen Wert İₘₐₓ an. In einer anderen Ausführungsform ist es jedoch denkbar, daß der Wert İₘₐₓ bereits während der Übergangsphase B auf einen endgültigen Wert ansteigt.

Der Wert bzw. der Verlauf des Maximalwertes İₘₐₓ kann auch nach Maßgabe des Sollwertes Pₛₒₗₗ bzw. des Sollwertverlaufes eingestellt werden. Hierfür kann ein Grenzsollwert Gₛₒₗₗ vorgesehen sein, dessen Wert in einem Bereich zwischen 1 bar und 5 bar, beispielsweise bei 2 bar liegen kann. Es kann dann z.B. der Sollwert Pₛₒₗₗ mit dem Grenzsollwert Gₛₒₗₗ verglichen werden. Ist der Sollwert Pₛₒₗₗ kleiner als der Grenzsollwert Gₛₒₗₗ und steigt der Sollwert Pₛₒₗₗ an, so kann der Maximalwert İₘₐₓ auf einen konstanten Wert eingestellt werden. Tritt ein leichter Überschwinger (P_{diff})auf, kann sich der Maximalwert İₘₐₓ proportional zu P_{diff} erhöhen, damit der Regler den Überschwinger ausregeln kann. Ist der Sollwert P_{Soll} konstant oder wird kleiner, so kann der Maximalwert Iₘₐₓ nach einer vorgegebenen Funktion, z.B. exponentiell, auf seinen endgültigen Wert ansteigen. Dasselbe kann gelten, wenn der Sollwert größer oder gleich dem Grenzsollwert Gₛₒₗₗ ist.

Vorzugsweise wird der Maximalwert İₘₐₓ quasi sprungförmig auf seinen endgültigen Wert hochgesetzt, wenn ein Überschwingbetriebszustand ermittelt wird, damit die Ansteuergröße I möglichst schnell geändert, vorzugsweise herabgesetzt werden kann, um dem Überschwingen entgegenzuwirken.

Zum Zeitpunkt T5 sind der Sollwert P_{Soll} und der entsprechend geregelte Istwert P_{Ist} konstant. Es kann dann z.B. eine Haltephase erkannt werden, während der die Ansteuergröße I verringert werden kann.

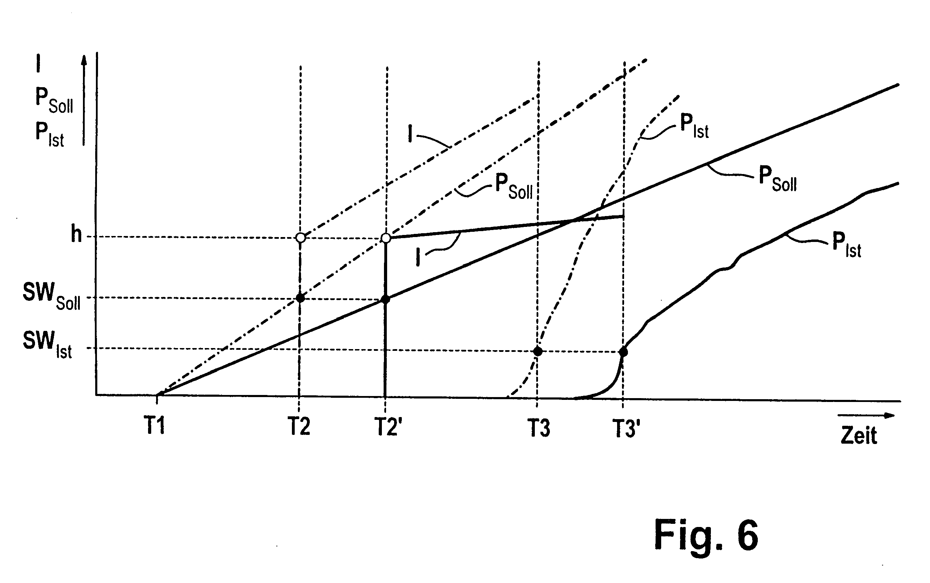

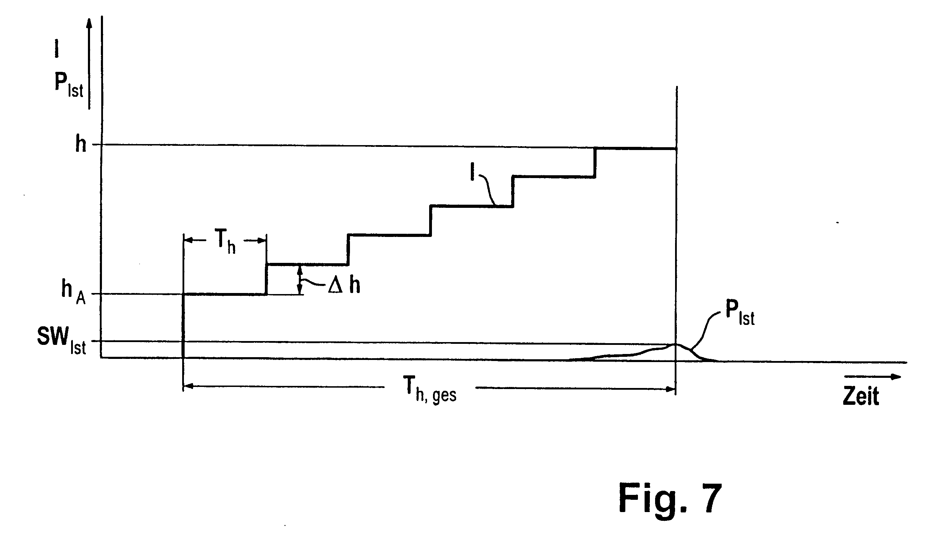

Fig. 6 zeigt, wie die Vorgabe der Ansteuergröße I im Rampenbetriebszustand in Abhängigkeit von der Änderungsgeschwindigkeit des Sollwertes P_{Soll}, d.h. der Steigung des Sollwertverlaufes angepaßt werden kann. Die Sprunghöhe h wird in etwa auf den Wert eingestellt, der benötigt wird, um einen Istwert P_{Ist}, wie z.B. einen Druck in einem Tandemhauptzylinder, erfassen zu können. Dieser Wert h kann fest abgespeichert sein, kann z.B. aber auch während des Betriebes der Bremsanlage jeweils neu optimiert werden. Näheres dazu wird später anhand der Fig. 7 erläutert. In Fig. 6 sind die Verläufe der Ansteuergröße I, des Sollwertes Pₛₒₗₗ und des Istwertes P_{Ist} für zwei verschiedene Sollwertverläufe dargestellt. Der eine Fall ist jeweils in durchgezogenen Linien gezeigt, und der andere Fall in Strich-Punkt-Linien. Die Sprunghöhe h ist in beiden Fällen gleich. Im ersten Fall der Strich-Punkt-Linien verläuft der Sollwert P_{Soll} steiler, d.h., es soll z.B. schneller und/oder mit größerer Kraft gebremst werden. Dementsprechend ist in dieser Ausführungsform der Verlauf der Ansteuergröße I im Rampenbetriebszustand steiler, damit der Istwert P_{Ist} dem Sollwert P_{Soll} schneller folgen kann. Im ersten Fall erreicht der Istwert P_{Ist} zum Zeitpunkt T3 den Istschwellenwert SW_{Ist}. Im zweiten Fall der durchgezogenen Linien ist der Verlauf des Sollwertes P_{Soll} nicht so steil, weshalb dementsprechend die Steigung des Verlaufs der Ansteuergröße I geringer ist. Dadurch erreicht der Istwert P_{Ist} im zweiten Fall erst zum späteren Zeitpunkt T3' den Istschwellenwert SW_{Ist}. Die Steigung der Rampe (Gerade) von der Ansteuergröße I kann insbesondere gleich der Steigung des Sollwertverlaufs sein. Die Dauer des Rampenbetriebszustandes ist in Fig. 6 in beiden Fällen, Bereich T2 bis T3 bzw. Bereich T2' bis T3', in etwa gleich lang.

Die Dauer des Rampenbetriebszustandes t_{Rampe} kann überwacht werden. Dafür kann ein Zeitbereich vorgegeben werden, innerhalb dessen die Zeitdauer t_{Rampe} liegen darf. Dieser Bereich wird durch einen unteren Zeitgrenzwert Tᵤ, der z.B. 120 ms betragen kann, und einen oberen Zeitgrenzwert Tₒ, der z.B. 150 ms betragen kann, begrenzt. Die Zeitgrenzwerte können je nach Bremsanlage eingestellt werden. Während eines Rampenbetriebszustandes kann dann z.B. die Dauer dieses Betriebszustandes bestimmt und mit den Zeitgrenzwerten verglichen werden. Liegt die Zeitdauer t_{Rampe} unterhalb des unteren Zeitgrenzwertes Tᵤ, wird z.B. die Sprunghöhe h um einen vorgegebenen Verringerungswert W1 verringert. Als zusätzliche Bedingung für die Verringerung der Sprunghöhe h kann z.B. zusätzlich vorgegeben werden, daß der Unterschied zwischen der Änderungsgeschwindigkeit des Sollwertes Ṗ_{Soll} und der Änderungsgeschwindigkeit des Istwertes Ṗ_{Ist} einen Änderungsschwellenwert nicht über- und/oder unterschreiten darf. Bei Vorliegen einer oder beider Bedingungen könnte dann die Sprunghöhe h verringert werden.

Liegt dagegen die Zeitdauer t_{Rampe} des Rampenbetriebszustands oberhalb des oberen Zeitgrenzwertes Tₒ, so kann die Sprunghöhe h z.B. um einen Erhöhungswert W2 erhöht werden.

Durch die Verringerung der Sprunghöhe h kann die Zeitdauer t_{Rampe} verlängert werden, und zusätzlich kann die Geräuschentwicklung der Bremsanlage, insbesondere des Elektromagneten bzw. des Ventils verringert werden. Durch die Erhöhung der Sprunghöhe h kann die Zeitdauer t_{Rampe} verkürzt werden. Der Unterschied zwischen den Änderungsgeschwindigkeiten des Sollwertes P_{Soll} und des Istwertes P_{Ist} kann z.B. durch Auswerten der Änderungsgeschwindigkeit der Regelabweichung Ṗ_{diff} ermittelt werden.

Die Sprunghöhe h kann z.B. während des Ruhebetriebszustandes, am Ende der Herstellung des Fahrzeugs zur Initialisierung, nach jeder Zündung oder auch z.B. während einer automatischen Abstandsregelung (ACC) unter bestimmten Bedingungen ermittelt werden. Die Vorgehensweise ist in Fig. 7 beispielhaft erläutert. Dort sind während dieser sog. Lernphase der Verlauf der Ansteuergröße I und des Istwertes P_{Ist} in Abhängigkeit von der Zeit dargestellt. Zu Beginn kann die Ansteuergröße I z.B. auf einen Anfangswert h_{A}, z.B. 1A gesetzt und danach stufenweise erhöht werden. Dies kann z.B. treppenförmig mit einer Stufenbreite Tₕ und einer Stufenhöhe Δh erfolgen. Während dieser Zeit wird z.B. der Istwert P_{Ist} erfaßt. Die Ansteuergröße I wird dann z.B. solange erhöht, bis ein tatsächlicher Istwert P_{Ist} erfaßt wird. Dieser Wert kann z.B. etwa gleich dem Istschwellenwert SW_{Ist} sein. Der dann anliegende Wert der Ansteuergröße I wird dann z.B. als Sprunghöhe h gespeichert. Anschließend kann dann die Ansteuergröße I wieder verringert werden, womit die Lernphase beendet ist.

Die Zeitdauer T_{h,ges} der Lernphase kann z.B. auf einen minimalen und/oder maximalen Wert begrenzt werden. Sie kann z.B. 3 s betragen. Die Stufenbreite Tₕ kann z.B. in einem Bereich zwischen 10 ms und 1 s liegen, beispielsweise 100 ms betragen. Die Stufenhöhe Δh kann von der Genauigkeit der Erfassung des Istwert-Sensors abhängen, kann z.B. maximal 50 mA betragen. Die Sprunghöhe h kann z.B. bei 2,2 A liegen. Die in bezug auf die Lernphase genannten Größen können erheblich in Abhängigkeit von dem verwendeten Bremssystem variieren.

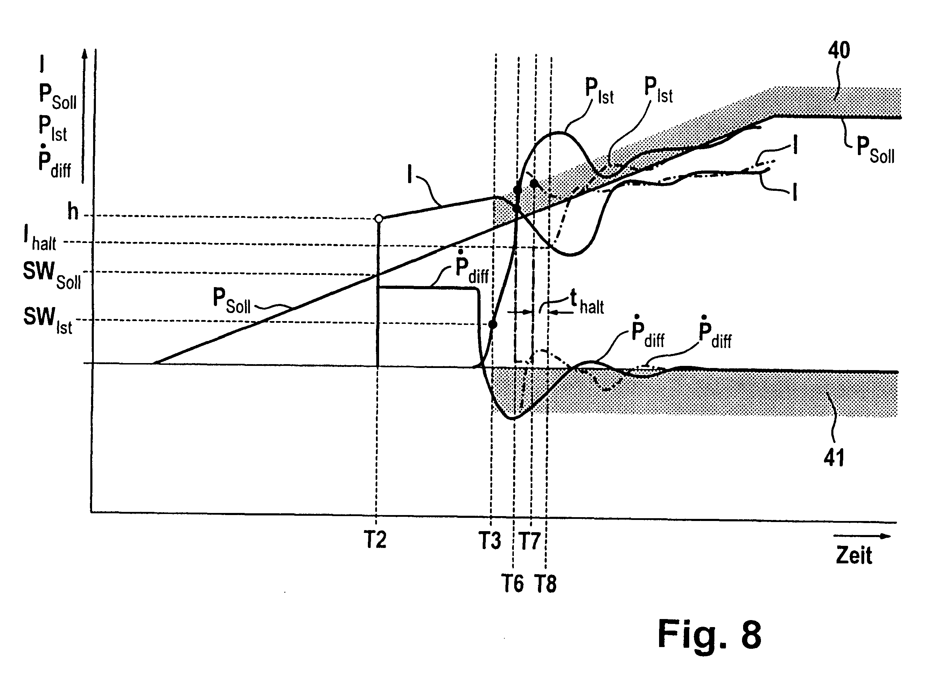

Anhand von Fig. 8 wird nun beispielhaft der Überschwingbetriebszustand näher erläutert. In dem Diagramm sind die Verläufe der Ansteuergröße I, des Sollwertes P_{Soll}, des Istwertes P_{Ist} und der Änderungsgeschwindigkeit der Regelabweichung Ṗ_{diff} für zwei verschiedene Fälle dargestellt. Der erste Fall, dargestellt mit durchgezogenen Linien, zeigt die Verläufe für den Fall, daß das Überschwingmodul 18 nicht vorgesehen ist. Der zweite Fall, dargestellt durch die Strich-Punkt-Linien, zeigt die Verläufe unter Einwirkung des Überschwingmoduls 18 im Überschwingbetriebszustand. Der Solldruck P_{Soll} verläuft in beiden Fällen gleich. Ab dem Zeitpunkt T3 ist ein grauer Bereich 40 oberhalb des Sollwertes P_{Soll} eingezeichnet. Dieser kennzeichnet den Bereich, den der Istwert P_{Ist} nicht überschreiten darf. Der untere graue Bereich 41, der ebenfalls ab dem Zeitpunkt T3 beginnt, bezeichnet den Bereich, den die Änderungsgeschwindigkeit Ṗ_{diff} nicht unterschreiten sollte. In der dargestellten Ausführungsform muß der obere Bereich 40 von dem Istwert P_{Ist} überschritten sein und zusätzlich der untere Bereich 41 von der Änderungsgeschwindigkeit Ṗ_{diff} unterschritten sein, damit ein Überschwingen erkannt wird. Der Vorteil liegt darin, daß einem hohen Überschwingen des Istwertes P_{Ist} gegenüber dem Sollwert P_{Soll} durch das Überschwingmodul 18 entgegengewirkt werden kann, wohingegen ein geringes Überschwingen z.B. von dem Kraftregelmodul ausgeregelt werden kann. In diesem Beispiel wird ein Überschwingen erst nach dem Beginn des Kraftregelbetriebszustands überprüft.

Der Bereich zwischen den Zeitpunkten T6 und T8 stellt den Bereich des Überschwingbetriebszustandes dar. Die Änderungsgeschwindigkeit der Regelabweichung Ṗ_{diff} unterschreitet bereits vor dem Zeitpunkt T6 (durchgezogene Linie) den erlaubten Bereich 41. Hierbei wird jedoch ein Überschwingen noch nicht erkannt, da der Istwert P_{Ist} noch innerhalb des erlaubten Bereiches 40 liegt. Erst bei Erreichen der Grenze des Bereiches 40 zum Zeitpunkt T6 wird der Überschwingbetriebszustand bestimmt, da auch weiterhin die Änderungsgeschwindigkeit der Regelabweichung Ṗ_{diff} den Bereich 41 unterschritten hat. Zu Beginn des Überschwingbetriebszustandes kann die Ansteuergröße I auf den Minimalwert Iₘᵢₙ gesetzt (Strich-Punkt-Linie) werden. Zum Zeitpunkt T7 liegen sowohl der Istwert P_{Ist} als auch die Änderungsgeschwindigkeit der Regelabweichung Ṗ_{diff} innerhalb der jeweiligen Bereiche 40 und 41, so daß die Ansteuergröße I z.B. auf einen Haltewert Iₕₐₗₜ gesetzt werden kann, der unterhalb der Sprunghöhe h liegen kann. Die Ansteuergröße I kann dann z.B. für eine Zeitdauer tₕₐₗₜ auf dem Haltewert Iₕₐₗₜ gehalten werden. Die Haltezeitdauer tₕₐₗₜ kann z.B. fest gespeichert sein. Sie kann aber auch in Abhängigkeit von bestimmten Größen variabel gehalten werden.

Nach Beendigung des Überschwingbetriebszustands zum Zeitpunkt T8 wird in den normalen Kraftregelbetrieb übergegangen, in dem z.B. das Kraftregelmodul 16 wieder die Ansteuergröße I ermittelt.

Eine häufige Ursache für ein Überschwingen des Istwertes P_{Ist} kann z.B. ein Durchgehen des Magnetankers des Elektromagneten sein; d.h. dieser geht in die Sättigung und verbleibt unabhängig vom Strom in einer Extremposition (Anschlag), die z.B. einer vollständigen Ventilöffnung entspricht. In diesem Fall ist daher ein Zusammenhang zwischen dem Magnetstrom, d.h. der Ansteuergröße I und der Ventilposition, d.h. der Bremsdrucksteuerung, nicht mehr garantiert. Deshalb hilft häufig nur noch ein abruptes Aussetzen der Kraftregelung und ein Zurücknehmen des Stromes z.B. auf Iₘᵢₙ, bis der Magnetanker von seinem Anschlag wieder absetzt. Das Überschwingmodul 18 kann somit das System bei einer instabil gewordenen Regelstrecke wieder stabilisieren.

Die erfindungsgemäße Vorrichtung kann ganz, oder teilweise auf einem Rechner realisiert sein, so daß das implementierte Verfahren digital durchgeführt werden kann. Dabei können die Abtastschritte jedoch so klein sein, daß das Verfahren als quasi-kontinuierlich angesehen werden kann. Bei ausreichender Werteauflösung können auch die Werte als quasi-kontinuierlich angesehen werden. Entsprechend sind die angegebenen Werte, wie z.B. der Istwert P_{Ist} oder der Sollwert P_{Soll}, den tatsächlichen Werten entsprechende Größen bzw. Signale, die z.B. in einem Rechner verarbeitet werden können. Der Rechner kann dementsprechend die Ansteuergröße als Signal ausgeben, das dann z.B. noch in eine entsprechende Ansteuergröße zur Ansteuerung umgewandelt werden kann. Im Falle eines Magnetstromes kann dieses z.B. bedeuten, daß die Ansteuergröße in Form von PWM-Signalen vorliegt. Die Zeiten bzw. Zeitdauern können in Form von Rechnerzählwerten vorliegen und/oder ausgewertet werden.

Die obigen Ausführungen zeigen, daß die Merkmale der erfindungsgemäßen Vorrichtung äußerst variabel an beliebige Situationen angepaßt werden können und somit eine deutliche Verbesserung z.B. in Bezug auf die Regelgüte gegenüber herkömmlichen Bremsregelungen darstellen. Sie können ohne weiteres für weitere nicht genannte Bremssituationen bzw. -zustände erweitert werden, da die genannten Zustände nicht abschließend sind.

## Patentansprüche

1. Vorrichtung zur Bremskraftsteuerung einer Bremsanlage mit einer Sensorik (1) zur Ermittlung eines Istwertes (P_{Ist}) einer eine Bremsung verursachenden Bremskraft, einer Ermittlungseinrichtung (2) zum Ermitteln eines Sollwertes (P_{Soll}) für die Bremskraft und einer Steuereinheit (3) zum Ermitteln einer Ansteuergröße (I) für ein Stellglied (4) zum Einstellen der Bremskraft, wobei die Steuereinheit (3) den Sollwert (P_{Soll}) von der Ermittlungseinrichtung (2) und den Istwert (P_{Ist}) von der Sensorik (1) empfängt, einen von zumindest zwei unterschiedlichen Betriebszuständen der Bremsanlage nach Maßgabe des Sollwertes (P_{Soll}) und/oder des Istwertes (P_{Ist}) bestimmt, die Ansteuergröße (I) für das Stellglied (4) in Abhängigkeit von dem Sollwert (P_{Soll}) und/oder dem Istwert (P_{Ist}) und nach Maßgabe des bestimmten Betriebszustandes ermittelt und die Ansteuergröße (I) an das Stellglied (4) ausgibt, **dadurch gekennzeichnet, dass** die Steuereinheit (3) enthält:
- ein Organisationsmodul (14), das den Istwert (P_{Ist}) mit einem Istschwellenwert (SW_{Ist}) vergleicht und
• dann, wenn der Istwert (P_{Ist}) kleiner als der Istschwellenwert (SW_{Ist}) ist, einen Rampenbetriebszustand ermittelt, und
• ansonsten einen Kraftregelbetriebszustand ermittelt,
- ein Rampenmodul (15), das bei Vorliegen des Rampenbetriebszustands ein entsprechendes Signal von dem Organisationsmodul (14) erhält und dann die Ansteuergröße (I) gemäß einer vorgegebenen Zeitfunktion ändert, insbesondere erhöht, und
- ein Kraftregelmodul (16), an dessen Eingang der Istwert (P_{Ist}) und der Sollwert (P_{Soll}) anliegen und das bei Vorliegen des Kraftregelbetriebszustands ein entsprechendes Signal von dem Organisationsmodul (14) erhält und dann die Ansteuergröße (I) in Abhängigkeit von dem Istwert (P_{Ist}) und dem Sollwert (P_{Soll}) ermittelt.

2. Vorrichtung nach Anspruch 1, bei der die Steuereinheit (3) eine Regelungseinrichtung (5) enthält, an der eingangsseitig der Istwert und der Sollwert anliegen und die einen Regler (6) enthält, der in Abhängigkeit von der Regeldifferenz (ΔP) zwischen dem Sollwert (P_{Soll}) und dem Istwert (P_{Ist}) eine erste Stellgröße (S1) für das Stellglied (4) ermittelt, wobei die Steuereinheit (3) ein Situationserkennungsmodul (7) enthält, das als Betriebszustand eine Kraftaufbauphase, eine Kraftabbauphase und eine Krafthaltephase erkennt und ein entsprechendes Signal an ein nachfolgendes nichtlineares Übertragungsglied (8) mit einer Dreipunktkennlinie ausgibt, das eine entsprechende zweite Stellgröße (S2) für das Stellglied (4) ausgibt, wobei die Steuereinheit (3) die erste Stellgröße (S1) mit der zweiten Stellgröße (S2) kombiniert, um die Ansteuergröße (I) für das Stellglied (4) zu erhalten.

3. Vorrichtung nach Anspruch 2, bei der der Regler (6) ein Verstärkungsglied (10) zum Verstärken der Regeldifferenz (ΔP) enthält und bei dem während einer Krafthaltephase dann, wenn die Regeldifferenz (ΔP) einen erlaubten Bereich über- oder unterschreitet, eine Änderung des Verstärkungsfaktors (V) des Verstärkungsgliedes (10) bewirkt wird.

4. Vorrichtung nach Anspruch 2 oder 3, bei der der Regler (6) einen Dreipunktschalter (11) enthält, an dessen Eingang die Regeldifferenz (ΔP) anliegt und der während der Krafthaltephase in Abhängigkeit von der Regeldifferenz (ΔP) eine dritte Stellgröße (S3) für das Stellglied (4) ausgibt, wobei die Steuereinheit (3) die dritte Stellgröße (S3) mit der ersten (S1) und zweiten Stellgröße (S2) kombiniert, um die Ansteuergröße (I) zu erhalten.

5. Vorrichtung nach zumindest einem der Ansprüche 2 bis 4, bei der die Regelungseinrichtung (5) eine Vorsteuerung (12) enthält, die in Abhängigkeit von dem Sollwert (P_{Soll}) eine vierte Stellgröße (S4) für das Stellglied (4) ermittelt, wobei die Steuereinheit (3) die vierte Stellgröße (S4) mit der ersten (S1), zweiten (S2) und dritten Stellgröße (S3) kombiniert, um die Ansteuergröße (I) zu erhalten, und wobei die Vorsteuerung (12) die vierte Stellgröße (S4) in größeren Zeitabständen ermittelt als der Regler (6) die erste (S1) und/oder dritte Stellgröße (S3).

6. Vorrichtung nach einem der Ansprüche 1 bis 5, bei der das Kraftregelmodul (16) der Regelungseinrichtung (5) nach zumindest einem der Ansprüche 2 bis 5 entspricht.

7. Vorrichtung nach Anspruch 1, bei der die Zeitfunktion einen Sprung einer bestimmten Sprunghöhe (h) und/oder eine Gerade mit einer bestimmten Rampensteigung (s) aufweist.

8. Vorrichtung nach Anspruch 7, bei der die Sprunghöhe (h) etwa derjenigen Ansteuergröße (I) entspricht, die benötigt wird, um eine minimale Bremskraft zu erzeugen, und/oder bei dem die Rampensteigung (s) in Abhängigkeit von der Änderungsgeschwindigkeit des Sollwertes (Ṗ_{Soll}) bestimmt wird.

9. Vorrichtung nach Anspruch 7 oder 8, bei der das Rampenmodul (15) die Sprunghöhe (h)
- dann, wenn die Zeitdauer (t_{Rampe}) des Rampenbetriebszustands kleiner als ein unterer Zeitgrenzwert (Tᵤ) ist und der Unterschied zwischen der Änderungsgeschwindigkeit des Sollwertes (Ṗₛₒₗₗ) und der Änderungsgeschwindigkeit des Istwertes (Ṗ_{Ist}) einen Änderungsschwellenwert (ΔSW) überschreitet, um einen Verringerungswert (W1) verringert, und/oder
- dann, wenn die Zeitdauer (t_{Rampe}) des Rampenbetriebszustands größer als ein oberer Zeitgrenzwert (Tₒ) ist, um einen Erhöhungswert (W2) erhöht.

10. Vorrichtung nach zumindest einem der Ansprüche 7 bis 9, bei der das Kraftregelmodul (16) zu Beginn des Kraftregelbetriebszustands während einer Übergangszeitdauer (t_{ü}) die Änderungsgeschwindigkeit der Ansteuergröße (i) auf eine maximale Änderungsgeschwindigkeit (İₘₐₓ) begrenzt und die maximale Änderungsgeschwindigkeit (İₘₐₓ) der Ansteuergröße zeitabhängig erhöht.

11. Vorrichtung nach zumindest einem der Ansprüche 7 bis 10, bei der die Steuereinheit (3) enthält:
- ein Überwachungsmodul (17), das den Sollwert (P_{Soll}) von dem Istwert (P_{Ist}) subtrahiert, um eine Regelabweichung (P_{diff}) zu erhalten, und einen Überschwingbetriebszustand ermittelt, wenn die Regelabweichung (P_{diff}) größer als ein Überschwingwert (Ü) ist und die positive Änderungsgeschwindigkeit der Regelabweichung (Ṗ_{diff}) größer als ein Überschwingänderungswert (ΔÜ) ist, und ein entsprechendes Signal an das Organisationsmodul (14) ausgibt, und
- ein Überschwingmodul (18), dem bei Vorliegen des Überschwingbetriebszustands vom Organisationsmodul (14) ein entsprechendes Signal zugeführt wird und das dann die Ansteuergröße (I) auf ein Ansteuerminimum (Iₘᵢₙ) setzt.

12. Vorrichtung nach Anspruch 11, bei der das Überschwingmodul (18) im Überschwingbetriebszustand dann, wenn die Regelabweichung (P_{diff}) kleiner als oder gleich dem Überschwingwert (Ü) ist, die Ansteuergröße (I) auf einen Haltewert (Iₕₐₗₜ) setzt, der größer als das Ansteuerminimum (Iₘᵢₙ) und kleiner als die Sprunghöhe (h) ist.

13. Vorrichtung nach Anspruch 11 oder 12, bei der das Organisationsmodul (14) einen dem Überschwingbetriebszustand folgenden Kraftregelbetriebszustand ermittelt, wenn die Ansteuergröße (I) für eine Haltezeitdauer (tₕₐₗₜ) auf dem Haltewert (Iₕₐₗₜ) gehalten wurde.

14. Vorrichtung nach zumindest einem der Ansprüche 1 bis 13, bei der das Organisationsmodul (14) den Sollwert (P_{Soll}) mit einem Sollschwellenwert (SW_{Soll}) vergleicht und dann, wenn der Sollwert (P_{Soll}) kleiner als der Sollschwellenwert (SW_{Soll}) ist, einen Ruhebetriebszustand ermittelt, wobei die Steuereinheit (3) ein Ruhemodul (19) enthält, das bei Vorliegen des Ruhebetriebszustands ein entsprechendes Signal von dem Organisationsmodul (14) erhält und dann die Ansteuergröße (I) auf einen das Stellglied (4) nicht ansteuernden Ruhewert (I_{Ruhe}) setzt.

## Claims

1. Device for controlling the brake force of a brake system comprising a sensor system (1) to detect an actual value (P_{actual}) of a brake force resulting in a braking operation, a determination device (2) to determine a nominal value (Pₙₒₘᵢₙₐₗ) for the brake force and a control unit (3) to determine a control variable (I) for a control member (4) to adjust the brake force, wherein the control unit (3) receives the nominal value (Pₙₒₘᵢₙₐₗ) from the determination device (2) and the actual value (P_{actual}) from the sensor system (1), determines one of at least two different operating conditions of the brake system according to the nominal value (Pₙₒₘᵢₙₐₗ) and/or the actual value (P_{actual}), detects the control variable (I) for the control member (4) depending on the nominal value (Pₙₒₘᵢₙₐₗ) and/or the actual value (P_{actual}) and according to the determined operating condition, and outputs the control variable (I) to the control member (4),
**characterized in that** the control unit (3) comprises the following elements:
- an organization module (14) which compares the actual value (P_{actual}) with an actual threshold value (SW_{actual}) and
detects a ramp operating condition if the actual value (P_{actual}) is lower than the actual threshold value (SW_{actual}), and otherwise detects a force control operating condition,
- a ramp module (15) which receives a corresponding signal from the organization module (14) in the presence of the ramp operating condition and thereafter changes, in particular raises, the control variable (I) according to a predetermined time function, and
- a force control module (16) at the inlet of which the actual value (P_{actual}) and the nominal value (Pₙₒₘᵢₙₐₗ) prevail and which, in the presence of the force control operating condition, receives a corresponding signal from the organization module (14) and thereafter detects the control variable (I) depending on the actual value (P_{actual}) and the nominal value (Pₙₒₘᵢₙₐₗ).

2. Device as claimed in claim 1, wherein the control unit (3) comprises a controlling device (5) to the input side of which the actual value and the nominal value are applied and which comprises a controller (6) that detects a first correcting variable (S1) for the control member (4) depending on the control difference (ΔP) between the nominal value (Pₙₒₘᵢₙₐₗ) and the actual value (P_{actual}), with the control unit (3) comprising a situation detection module (7) which identifies a force build-up phase, a force reduction phase and a force maintenance phase as an operating condition and sends a corresponding signal to a subsequent non-linear transmission element (8) having a three-point characteristic curve and outputting a corresponding second correcting variable (S2) for the control member (4), with the control unit (3) combining the first correcting variable (S1) with the second correcting variable (S2) in order to obtain the control variable (I) for the control member (4).

3. Device as claimed in claim 2, wherein the controller (6) comprises an amplification element (10) for amplifying the control difference (ΔP) and wherein during a force maintenance phase, a change of the amplification factor (V) of the amplification element (10) is brought about if the control difference (ΔP) exceeds or does not reach a permitted range.

4. Device as claimed in claim 2 or 3, wherein the controller (6) comprises a three-point switch (11), at the input of which the control difference (ΔP) is applied and which outputs a third correcting variable (S3) for the control member (4) depending on the control difference (ΔP) during the force maintenance phase, with the control unit (3) combining the third correcting variable (S3) with the first (S1) and the second (S2) correcting variable in order to obtain the control variable (I).

5. Device as claimed in at least any one of claims 2 to 4, wherein the controlling device (5) comprises a pilot control (12) which detects a fourth correcting variable (S4) for the control member (4) depending on the nominal value (Pₙₒₘᵢₙₐₗ), with the control unit (3) combining the fourth correcting variable (S4) with the first (S1), the second (S2), and the third correcting variable (S3) in order to obtain the control variable (I), and with the pilot control (12) detecting the fourth correcting variable (S4) in longer intervals than the controller (6) detects the first (S1) and/or the third correcting variable (S3).

6. Device as claimed in any one of claims 1 to 5, wherein the force control module (16) of the controlling device (5) corresponds to at least any one of claims 2 to 5.

7. Device as claimed in claim 1, wherein the time function includes a jump of a defined magnitude of jump (h) and/or a straight line with a defined ramp gradient (s).

8. Device as claimed in claim 7, wherein the magnitude of jump (h) corresponds roughly to the control variable (I) which is required to produce a minimum brake force and/or wherein the ramp gradient (s) is determined depending on the rate of change of the nominal value (Ṗₙₒₘᵢₙₐₗ).

9. Device as claimed in claim 7 or 8, wherein the ramp module (15) reduces the magnitude of jump (h) by a reduction value (W1)
- when the period (tᵣₐₘₚ) of the ramp operating condition is inferior to a bottom time limit value (Tᵤ) and the difference between the rate of change of the nominal value (Ṗₙₒₘᵢₙₐₗ) and the rate of change of the actual value (Ṗ_{actual}) exceeds a change threshold value (ΔSW),
and/or raises the magnitude of jump (h) by an increase value (W2)
- when the period (tᵣₐₘₚ) of the ramp operating condition exceeds a top limit value (Tₒ).

10. Device as claimed in at least any one of claims 7 to 9, wherein the force control module (16) at the beginning of the force control operating condition during a transitional period (tₒ) limits the rate of change of the correcting variable (İ) to a maximum rate of change (İₘₐₓ) and raises the maximum rate of change (İₘₐₓ) of the correcting variable time-responsively.

11. Device as claimed in at least any one of claims 7 to 10, wherein the control unit (3) comprises the following elements:
- a monitoring module (17) which subtracts the nominal value (Pₙₒₘᵢₙₐₗ) from the actual value (P_{actual}) in order to obtain a control difference (P_{diff}), and detects an overshoot operating condition if the control difference (P_{diff}) exceeds an overshoot value (Ü) and the positive rate of change of the control difference (P_{diff}) exceeds an overshoot change value (ΔÜ) and outputs a corresponding signal to the organization module (14), and
- an overshoot module (18) which is fed with a corresponding signal from the organization module (14) in the presence of the overshoot operating condition and thereafter sets the control variable (I) to an actuation minimum (Iₘᵢₙ).

12. Device as claimed in claim 11, wherein the overshoot module (18) in the overshoot operating condition, if the control difference (P_{diff}) is lower than, or equal to, the overshoot value (Ü), sets the control variable (I) to a holding value (I_{hold}) which is higher than the actuation minimum (Iₘᵢₙ) and lower than the magnitude of jump (h).

13. Device as claimed in claim 11 or 12, wherein the organization module (14) detects a force control operating condition following the overshoot operating condition if the control variable (I) has been maintained on the holding value (I_{hold}) for a holding period (t_{hold}).

14. Device as claimed in at least any one of claims 1 to 13, wherein the organization module (14) compares the nominal value (Pₙₒₘᵢₙₐₗ) with a nominal threshold value (SWₙₒₘᵢₙₐₗ) and detects an operating condition of rest if the nominal value (Pₙₒₘᵢₙₐₗ) is lower than the nominal threshold value (SWₙₒₘᵢₙₐₗ), with the control unit (3) comprising a rest module (19) which receives a corresponding signal from the organization module (14) in the presence of the operating condition of rest and thereafter sets the control variable (I) to a rest value (Iᵣₑₛₜ) which does not actuate the control member (4).

## Revendications

1. Dispositif pour commander la force de freinage d'un système de freinage comportant des capteurs (1) pour déterminer une valeur réelle (P_{réelle}) d'une force de freinage provoquant un freinage, un dispositif de détermination (2) pour déterminer une valeur de consigne (P_{consigne}) pour la force de freinage ainsi qu'une unité de commande (3) pour déterminer une grandeur de commande I pour un organe de réglage (4) afin de régler la force de freinage, l'unité de commande (3) recevant la valeur de consigne (P_{consigne}) du dispositif de détermination (2) et la valeur réelle (P_{réelle}) des capteurs (1), déterminant l'un d'au moins deux états de fonctionnement différents du système de freinage en fonction de la valeur de consigne (P_{consigne}) et/ou de la valeur réelle (P_{réelle}) déterminant la grandeur de commande (I) pour l'organe de réglage (4) en fonction de la valeur de consigne (P_{consigne}) et/ou de la valeur réelle (P_{réelle}) et suivant l'état de fonctionnement déterminé, et délivrant la grandeur de commande (I) à l'organe de réglage (4), **caractérisé en ce que** l'unité de commande (3) contient :
- un module d'organisation (14) qui compare la valeur réelle (P_{réelle}) à une valeur de seuil réelle (SW_{réelle}) et
• si la valeur réelle (P_{réelle}) est inférieure à la valeur de seuil réelle (SW_{réelle}), détermine un état de fonctionnement de rampe, et
• détermine sinon un état de fonctionnement de régulation de la force,
- un module de rampe (15) qui en présence de l'état de fonctionnement de rampe reçoit un signal correspondant du module d'organisation (14) puis modifie la grandeur de commande (I) suivant une fonction temporelle prédéfinie, en particulier l'augmente, et
- un module de régulation de la force (16) à l'entrée duquel s'applique la valeur réelle (P_{réelle}) et la valeur de consigne (P_{consigne}), et qui en présence de l'état de fonctionnement de régulation de la force reçoit un signal correspondant du module d'organisation (14), puis détermine la grandeur de commande (I) en fonction de la valeur réelle (P_{réelle}) et de la valeur de consigne (P_{consigne}).

2. Dispositif selon la revendication 1, dans lequel l'unité de commande (3) contient un dispositif de régulation (5) auquel s'appliquent côté entrée la valeur réelle et la valeur de consigne et qui contient un régulateur (6) lequel détermine, en fonction de la différence de régulation (ΔP) entre la valeur de consigne (P_{consigne}) et la valeur réelle (P_{réelle}), une première grandeur de réglage (S1) pour l'organe de réglage (4), l'unité de commande (3) contenant un module de reconnaissance de situation (7) qui reconnaît, en tant qu'état de fonctionnement, une phase de montée de la force, une phase de réduction de la force et une phase de maintien de la force, et délivre un signal correspondant à un organe de transmission (8) non linéaire suivant avec une caractéristique à trois points, lequel délivre une deuxième grandeur de réglage (S2) correspondante pour l'organe de réglage (4), l'unité de commande (3) combinant la première grandeur de réglage (S1) avec la deuxième grandeur de réglage (S2), afin d'obtenir la grandeur de commande (I) pour l'organe de réglage (4).

3. Dispositif selon la revendication 2, dans lequel le régulateur (6) contient un organe d'amplification (10) pour amplifier la différence de régulation (ΔP) et avec lequel une variation du facteur d'amplification (V) de l'organe d'amplification (10) est provoquée, pendant une phase de maintien de la force, lorsque la différence de régulation (ΔP) dépasse ou sous-dépasse un domaine autorisé.

4. Dispositif selon la revendication 2 ou 3, dans lequel le régulateur (6) contient un interrupteur à trois points (11) à l'entrée duquel s'applique la différence de régulation (ΔP) et qui, pendant la phase de maintien de la force, délivre, en fonction de la différence de régulation (ΔP), une troisième grandeur de réglage (S3) pour l'organe de réglage (4), l'unité de commande (3) combinant la troisième grandeur de réglage (S3) avec la première grandeur de réglage (S1) et la deuxième grandeur de réglage (S2), afin d'obtenir la grandeur de commande (I).

5. Dispositif selon l'une au moins des revendications 2 à 4, dans lequel le dispositif de régulation (5) contient une commande pilote (12) qui détermine, en fonction de la valeur de consigne (P_{consigne}), une quatrième grandeur de réglage (S4) pour l'organe de réglage (4), l'unité de commande (3) combinant la quatrième grandeur de réglage (S4) avec la première grandeur de réglage (S1), la deuxième grandeur de réglage (S2) et la troisième grandeur de réglage (S3), afin d'obtenir la grandeur de commande (I), et la commande pilote (12) déterminant la quatrième grandeur de réglage (S4) à des intervalles de temps plus grands que le régulateur (6) ne détermine la première grandeur de réglage (S1) et/ou la troisième grandeur de réglage (S3).

6. Dispositif selon l'une des revendications 1 à 5, dans lequel le module de régulation de la force (16) correspond au dispositif de régulation (5) selon l'une au moins des revendications 2 à 5.

7. Dispositif selon la revendication 1, dans lequel la fonction temporelle présente un saut d'une hauteur de saut (h) déterminée et/ou une droite avec une pente de rampe (s) déterminée.

8. Dispositif selon la revendication 7, dans lequel la hauteur de saut (h) correspond approximativement à la grandeur de commande (I) qui est nécessaire pour produire une force de freinage minimale, et/ou dans lequel la pente de rampe (s) est déterminée en fonction de la vitesse de variation de la valeur de consigne. (P_{consigne}).

9. Dispositif selon la revendication 7 ou 8, dans lequel le module de rampe (15) :
- réduit la hauteur de saut (h) d'une valeur de réduction (W1) lorsque la durée (tᵣₐₘₚₑ) de l'état de fonctionnement de rampe est inférieure à une valeur limite temporelle inférieure (Tᵤ), et lorsque la différence entre la vitesse de variation de la valeur de consigne (P_{consigne}) et la vitesse de variation de la valeur réelle (P_{réelle}) dépasse une valeur de seuil de variation (ΔSW), et/ou
- augmente la hauteur de saut (h) d'une valeur d'augmentation (W2) lorsque la durée (tᵣₐₘₚₑ) de l'état de fonctionnement de rampe est supérieure à une valeur limite temporelle supérieure (Tₒ).

10. Dispositif selon l'une au moins des revendications 7 à 9, dans lequel le module de régulation de la force (16) limite la vitesse de variation de la grandeur de commande (Í) à une vitesse de (İₘₐₓ), au début de l'état de fonctionnement de régulation de la force, pendant une durée de transition (tₜᵣ), et augmente la vitesse de variation (İₘₐₓ) de la grandeur de commande en fonction du temps.

11. Dispositif selon l'une au moins des revendications 7 à 10, dans lequel l'unité de commande (3) contient :
- un module de surveillance (17) qui soustrait la valeur de consigne (P_{consigne}) de la valeur réelle (P_{réelle}), pour obtenir un écart de régulation (P_{diff}) et détermine un état de fonctionnement de suroscillation lorsque l'écart de régulation (P_{diff}) est supérieur à une valeur de suroscillation (Ü) et la vitesse de variation positive de l'écart de régulation (P_{diff}) est supérieure à une valeur de variation de suroscillation (ΔÜ), et délivre un signal correspondant au module d'organisation (14), et
- un module de suroscillation (18) auquel, en présence de l'état de fonctionnement de suroscillation, est amené un signal correspondant et qui place ensuite la grandeur de commande (I) sur un minimum de commande (Iₘᵢₙ).

12. Dispositif selon la revendication 11, dans lequel le module de suroscillation (18) place la grandeur de commande (I) sur une valeur de maintien (Iₘₐᵢₙₜᵢₑₙ) qui est supérieure au minimum de commande (Iₘᵢₙ) et inférieure à la hauteur de saut (h), lorsque l'écart de régulation (P_{diff}) est inférieur ou égal à la valeur de suroscillation (Ü).

13. Dispositif selon la revendication 11 ou 12, dans lequel le module d'organisation détermine un état de fonctionnement de régulation de la force, faisant suite à l'état de fonctionnement de suroscillation, lorsque la grandeur de commande (I) a été maintenue pendant une durée de maintien (tₘₐᵢₙₜᵢₑₙ) à la valeur de maintien (Iₘₐᵢₙₜᵢₑₙ).

14. Dispositif selon l'une au moins des revendications 1 à 13, dans lequel le module d'organisation (14) compare la valeur de consigne (P_{consigne}) à une valeur de seuil de consigne (SW_{consigne}) puis, lorsque la valeur de consigne (P_{consigne}) est inférieure à la valeur de seuil de consigne SW_{consigne}), détermine un état de fonctionnement de repos, l'unité de commande (3) contenant un module de repos (19) qui, en présence de l'état de fonctionnement de repos, reçoit un signal correspondant du module d'organisation (14), et place alors la grandeur de commande (I) à une valeur de repos (Iᵣₑₚₒₛ) ne commandant pas l'organe de réglage (4).
